# EUROPÄISCHE PATENTANMELDUNG

(11) **EP 3 922 994 A1**
(43) Veröffentlichungstag der Anmeldung: **15.12.2021**
(21) Anmeldenummer: 20178857.7
(22) Anmeldetag: 09.06.2020
(51) Int. Cl.: G01N 35/00, G01N 35/10, G01N 35/04

(54) **VORRICHTUNG ZUR PROZESSIERUNG VON REAGENZBEHÄLTERN AUF MEHREREN EBENEN**

(71) Anmelder: Siemens Healthcare Diagnostics Products GmbH, 35041 Marburg (DE)
(72) Erfinder: Michels, Thorsten, 64521 Gross-Gerau (DE)

(57) **Zusammenfassung**

Vorrichtung (1) zur Prozessierung von Reagenzbehältern (2) auf mehreren Ebenen für ein automatisches Analysegerät, die Vorrichtung (1) umfassend eine automatische Zugriffsvorrichtung (3) für einen Zugriff auf die Reagenzbehälter (2) und/oder auf Reagenzien in den Reagenzbehältern (2), eine erste Vorrichtung (4) umfassend eine Mehrzahl von ersten Aufnahmepositionen (5) für Reagenzbehälter (2), wobei die ersten Aufnahmepositionen (5) auf einer ersten Ebene angeordnet sind, und eine zweite Vorrichtung (6) umfassend eine Mehrzahl von zweiten Aufnahmepositionen (7) für Reagenzbehälter (2), wobei die zweiten Aufnahmepositionen (7) auf einer zweiten Ebene angeordnet sind.

## Beschreibung

Die Erfindung betrifft eine Vorrichtung zur Prozessierung von Reagenzbehältern auf mehreren Ebenen für ein automatisches Analysegerät.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

In medizintechnischen Geräten wie z.B. diagnostischen Analysegeräten zur automatischen Analyse und Untersuchung von z.B. in-vitro Proben von biologischen Körperflüssigkeiten eingesetzt werden, werden beispielsweise die benötigten Reagenzien mittels einer Pipettiervorrichtung mit einer Pipettiernadel in eine Messküvette eingefüllt. Die Messküvette wird dabei mit einem Küvettengreifer innerhalb des automatischen Analysegerätes zu verschiedenen Positionen mittels eines Robotorarms automatisch verfahren, der Teil einer Robotorstation ist. Nach der Messung wird die benutzte Messküvette zur Entsorgung durch einen Abfallschacht in einen Abfallbehälter verbracht.

In solchen automatischen Analysatoren werden Verbrauchsmaterialien, wie z.B. Reagenzien im Gerät gespeichert, um einen automatischen Betrieb über eine längere Zeit bzw. zur Analyse von einer größeren Anzahl von Proben zu ermöglichen. Typischerweise erfolgt dies indem Reagenzien in Reagenzbehältern flächig auf drehbaren Reagenzrädern oder auf Tabletts im Gerät angeordnet werden. Da typischerweise eine größere Anzahl von Reagenzien benötigt wird, wird für die Lagerung der Reagenzien auf dem Gerät viel Fläche benötigt. Dies wirkt sich jedoch sehr nachteilig auf die benötigte Stellfläche des Analysators aufgrund dessen entsprechender Größe im Labor aus.

In Analysatoren, bei denen Aufnahmepositionen auf mehreren übereinander liegenden Ebenen angeordnet sind, treten Einschränkungen auf hinsichtlich von Zugriffsmöglichkeiten auf Aufnahmepositionen. Dies betrifft insbesondere auch Situationen, bei denen von oben, z.B. mittels einer Pipettiervorrichtung, auf Aufnahmepositionen zugegriffen werden soll, die sich auf einer Ebene befinden, über der sich eine weitere, höher liegende Ebene mit Aufnahmepositionen befindet. Dabei wurde bisher eine Aussparung in der höher liegenden Ebene vorgesehen, durch die dann ein entsprechender Zugriff von oben durch die Aussparung hindurch möglich ist. Dabei ergeben sich jedoch verschiedene Nachteile. Beispielsweise geht Fläche zur Anordnung von Aufnahmepositionen in der höher liegenden Ebene verloren. Somit reduzieren sich entsprechend die Kapazitäten der Analysatoren. Weiter unterliegen der Aufbau und der Betrieb solcher Vorrichtungen verschiedenen unvorteilhaften Beschränkungen, da die Aussparung bei entsprechenden Zugriffen jeweils an geeigneten Stellen angeordnet werden muss.

Die Vorrichtungen aus dem Stand der Technik ermöglichen also gewöhnlich nicht eine größere Anzahl von Reagenzbehältern in einem automatischen Analysator anzuordnen, ohne dass dessen Stellfläche im Labor entsprechend vergrößert ist oder es zu unvorteilhaften Einschränkungen hinsichtlich Aufbau und Betrieb kommt.

Es ist daher Aufgabe der Erfindung, einen automatischen Betrieb eines Analysators über eine längere Zeit bzw. zur Analyse von einer größeren Anzahl von Proben zu ermöglichen, ohne dass der Analysator eine vergrößerte Stellfläche im Labor benötigt. Weiter soll eine größere Flexibilität bei Aufbau und Betrieb des Analysators ermöglicht werden.

**Diese Aufgabe wird erfindungsgemäß durch die im Folgenden beschriebenen Gegenstände und Verfahren gelöst.**

Es wurde gefunden, dass eine verbesserte Vorrichtung zur Prozessierung von Reagenzbehältern in automatischen Analysatoren erreicht werden kann, wenn die Vorratshaltung der Reagenzbehälter auf mehreren Ebenen übereinander angeordnet erfolgt, wobei die Anordnung so erfolgt, dass der Zugriff auf die Reagenzbehälter auf einer niedrigeren Ebene von oben an einer Haltevorrichtung einer höheren Ebene vorbei erfolgen kann.

Dies hat den Vorteil, dass bei gleicher benötigter Fläche die Anzahl der Gefäße bzw. Reagenzbehälter deutlich erhöht werden kann und damit einen automatischen Betrieb eines Analysators über eine längere Zeit bzw. zur Analyse von einer größeren Anzahl von Proben zu ermöglichen, ohne dass der Analysator eine vergrößerte Stellfläche im Labor benötigt. Weiter wird eine größere Flexibilität bei Aufbau und Betrieb des Analysators ermöglicht.

Gegenstand der vorliegenden Erfindung ist insbesondere eine Vorrichtung zur Prozessierung von Reagenzbehältern auf mehreren Ebenen für ein automatisches Analysegerät, die Vorrichtung umfassend eine automatische Zugriffsvorrichtung für einen Zugriff auf die Reagenzbehälter und/oder auf Reagenzien in den Reagenzbehältern, wobei die Zugriffsvorrichtung entlang eines Verfahrweges verfahrbar ist, eine erste Vorrichtung umfassend eine Mehrzahl von ersten Aufnahmepositionen für Reagenzbehälter, wobei die ersten Aufnahmepositionen auf einer ersten Ebene angeordnet sind, eine zweite Vorrichtung umfassend eine Mehrzahl von zweiten Aufnahmepositionen für Reagenzbehälter, wobei die zweiten Aufnahmepositionen auf einer zweiten Ebene angeordnet sind, wobei die zweite Vorrichtung wenigstens teilweise über der ersten Vorrichtung angeordnet ist, wobei die zweite Ebene wenigstens teilweise über der ersten Ebene angeordnet ist, wobei die automatische Zugriffsvorrichtung wenigstens teilweise über der ersten und der zweiten Vorrichtung angeordnet ist, wobei der Verfahrweg der Zugriffsvorrichtung die zweite Ebene schneidet, wobei die erste Vorrichtung an einer ersten Haltervorrichtung bewegbar befestigt ist und wobei die zweite Vorrichtung an einer zweiten Haltervorrichtung bewegbar befestigt ist, wobei die ersten Aufnahmepositionen auf der ersten Ebene und/oder die zweiten Aufnahmepositionen auf der zweiten Ebene verschiebbar sind, wobei die zweite Haltevorrichtung in einem Abstand zum Verfahrweg der Zugriffsvorrichtung im Bereich der zweiten Ebene angeordnet ist, so dass ein Zugriff auf die Reagenzbehälter und/oder die Reagenzien in den Reagenzbehältern mittels der Zugriffsvorrichtung von oben an der zweiten Haltevorrichtung vorbei auf mindestens einen in einer der ersten Aufnahmepositionen angeordneten Reagenzbehälter und/oder Reagenzien darin erfolgen kann.

Der Verfahrweg der Zugriffsvorrichtung schneidet also die zweite Ebene in einem Schnittbereich. Die zweite Haltevorrichtung ist in einem Abstand zu diesem Schnittbereich in der zweiten Ebene angeordnet.

In einer bevorzugten Ausführung umfasst die Prozessierung der Reagenzbehälter eine Eingabe, Ausgabe und/oder Lagerung von einem oder mehrerer Reagenzbehälter.

In einer weiteren bevorzugten Ausführung ist die zweite Haltevorrichtung versetzt zum Vertikalen Bewegungsraum der Zugriffsvorrichtung in der zweiten Ebene angeordnet.

In einer weiteren bevorzugten Ausführung sind die erste und zweite Haltevorrichtung teilweise, bevorzugt vollständig übereinander angeordnet. Dies ermöglicht eine turmartigen Aufbau übereinander, der besonders platzsparend ist.

In einer weiteren bevorzugten Ausführung sind die Verfahrwege der ersten und zweiten Vorrichtung teilweise, bevorzugt vollständig übereinander angeordnet. Dies ermöglicht eine turmartigen Aufbau übereinander, der besonders platzsparend ist.

In einer weiteren bevorzugten Ausführung umfasst die Zugriffsvorrichtung eine Pipettiervorrichtung umfassend eine Pipettiernadel zum Pipettieren von Reagenzien. Dies hat den Vorteil, dass automatisiert Pipettiervorgänge durchgeführt werden können.

In einer weiteren bevorzugten Ausführung umfasst die Zugriffsvorrichtung einen automatischen Transferarm zum Transferieren von Reagenzbehältern innerhalb des Analysegeräts. Dies hat den Vorteil, dass die Reagenzbehälter vollständig automatisiert im Analysegerät verbracht werden können.

In einer weiteren bevorzugten Ausführung umfasst die erste und/oder zweite Haltervorrichtung jeweils mindestens eine Schiene und wobei bevorzugt die Haltevorrichtung an dieser Schiene entlang verfahrbar ist. Dies ermöglicht eine besonders einfache Realisierung der Verfahrbarkeit der ersten bzw. zweiten Vorrichtung entlang der jeweiligen Schiene.

In einer weiteren bevorzugten Ausführung sind die erste und/oder die zweiten Vorrichtung miteinander beweglich verbunden.

In einer weiteren bevorzugten Ausführung kann die Zugriffsvorrichtung auf alle in zweiten Aufnahmepositionen angeordneten Reagenzbehältern zugreifen. Dies hat den Vorteil, dass Durchsatz und Abarbeitungsgeschwindigkeiten erhöht werden können.

In einer weiteren bevorzugten Ausführung sind die Normalen der ersten und der zweiten Ebene parallel, und wobei bevorzugt die Normale der ersten und/oder der zweiten Ebene parallel zum Richtungsvektor der Schwerkraft verläuft.

In einer weiteren bevorzugten Ausführung ist die Zugriffsvorrichtung bevorzugt parallel und/oder senkrecht zur Normalen der ersten und/oder der zweiten Ebene verfahrbar.

In einer weiteren bevorzugten Ausführung umfasst die Zugriffsvorrichtung eine Transfervorrichtung zum Transferieren von Reagenzbehältern in die ersten und/oder zweiten Aufnahmepositionen hinein und/oder aus diesen heraus. Dies hat den Vorteil, dass eine erhöhter Automatisierungsgrad erreicht werden kann.

Ein weiterer Gegenstand der Erfindung ist ein Verfahren zur Lagerung von Reagenzbehältern auf mehreren Ebenen für ein automatisches Analysegerät mittels einer erfindungsgemäßen Vorrichtung zur Prozessierung von Reagenzbehältern, das Verfahren umfassend die folgenden Schritte:
- Anordnung mindestens eines ersten Reagenzbehälters in eine der ersten Aufnahmepositionen,
- Zugriff mittels der Zugriffsvorrichtung von oben auf den ersten Reagenzbehälter.

In einer bevorzugten Ausführung umfasst das Verfahren weiter die folgenden Schritte:
- Anordnung mindestens eines zweiten Reagenzbehälters in eine der ersten Aufnahmepositionen,
- Anordnung der ersten Aufnahmepositionen auf der ersten Ebene und/oder der zweiten Aufnahmepositionen auf der zweiten Ebene durch verschieben der ersten Vorrichtung und/oder Verschiebung der zweiten Vorrichtung, so dass die zweite Vorrichtung sich nicht über der ersten Aufnahmeposition mit dem zweiten Reagenzbehälter befindet,
- Zugriff mittels der Zugriffsvorrichtung von oben auf den zweiten Reagenzbehälter.

Ein weiterer Gegenstand der Erfindung ist ein automatisches Analysegerät umfassend eine erfindungsgemäße Vorrichtung zur Prozessierung von Reagenzbehältern auf mehreren Ebenen, wobei das automatische Analysegerät bevorzugt einen automatischen Gefäßgreifer umfasst.

Ein weiterer Gegenstand der Erfindung ist die Verwendung einer erfindungsgemäßen Vorrichtung zur Prozessierung von Reagenzbehältern auf mehreren Ebenen für ein automatisches Analysegerät, wobei das automatische Analysegerät bevorzugt einen automatischen Gefäßgreifer umfasst.

Eine Prozessierung von Reagenzbehältern umfasst insbesondere bevorzugt eine Lagerung von Reagenzbehältern.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Bei einer Messküvette handelt es sich beispielsweise um eine Küvette oder ein Reaktionsgefäß aus Glas, Kunststoff oder Metall. Vorteilhafterweise ist die Messküvette aus optisch transparenten Materialien gefertigt, was besonders beim Einsatz von optischen Analyseverfahren vorteilhaft sein kann.

Die Begriffe "Messküvette" und "Küvette" werden synonym verwendet und bezeichnen den gleichen Gegenstand.

**Die Erfindung wird anhand von Zeichnungen exemplarisch näher erläutert. Darin zeigen:**

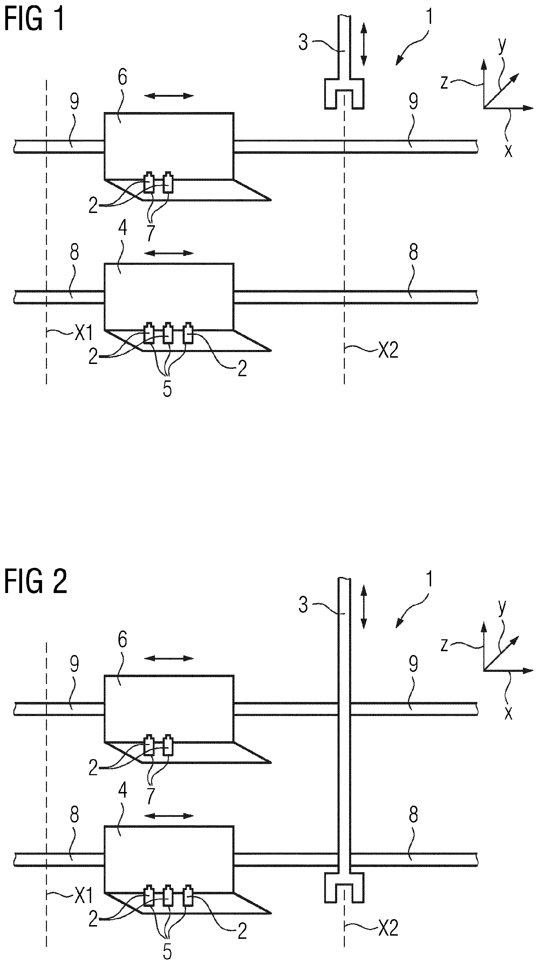

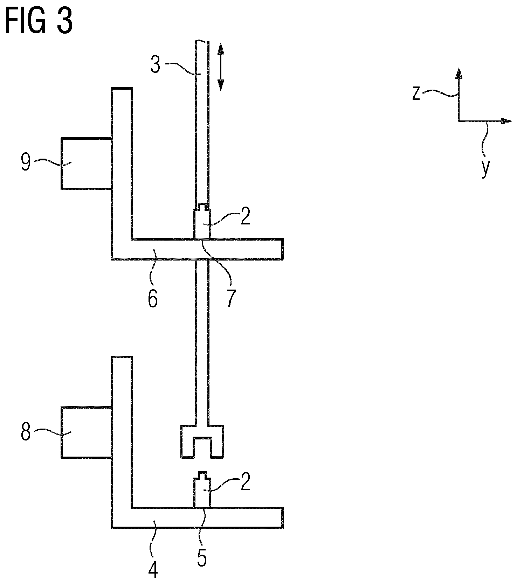

FIG 1, 2 und 3 schematisch den Aufbau einer Vorrichtung (1) zur Prozessierung von Reagenzbehältern (2) auf mehreren Ebenen für ein automatisches Analysegerät in unterschiedlichen Betriebszuständen bzw. Ansichten.

**Gleiche Teile sind in allen Figuren mit denselben Bezugszeichen versehen.**

Die Vorrichtung (1) gemäß FIG 1, 2 und 3 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiereinrichtungen und Transporteinrichtungen sowie weiterhin eine Steuereinheit zum automatisierten Steuern eines erfindungsgemäßen Verfahrens zur Prozessierung von Reagenzbehältern (2) auf mehreren Ebenen für ein automatisches Analysegerät mittels einer erfindungsgemäßem Vorrichtung (1).

FIG 1 zeigt eine Ansicht der Vorrichtung (1) zur Prozessierung von Reagenzbehältern (2) auf mehreren Ebenen für ein automatisches Analysegerät. Die Vorrichtung (1) umfasst eine automatische Zugriffsvorrichtung (3) für einen Zugriff auf die Reagenzbehälter (2) und/oder auf Reagenzien in den Reagenzbehältern (2). Die Zugriffsvorrichtung (3) ist entlang eines Verfahrweges in Raumrichtung Y nach oben und unten verfahrbar.

Die Vorrichtung (1) umfasst weiter eine erste Vorrichtung (4) umfassend eine Mehrzahl von ersten Aufnahmepositionen (5) für Reagenzbehälter (2), wobei die ersten Aufnahmepositionen (5) auf einer ersten Ebene angeordnet sind und weiter eine zweite Vorrichtung (6) umfassend eine Mehrzahl von zweiten Aufnahmepositionen (7) für Reagenzbehälter (2), wobei die zweiten Aufnahmepositionen (7) auf einer zweiten Ebene angeordnet sind. Die zweite Vorrichtung (6) ist über der ersten Vorrichtung (4) angeordnet und die zweite Ebene ist über der ersten Ebene angeordnet.

Die automatische Zugriffsvorrichtung (3) ist über der ersten (4) und der zweiten Vorrichtung (6) angeordnet, wobei der Verfahrweg der Zugriffsvorrichtung (3) die zweite Ebene schneidet.

Die erste Vorrichtung (4) ist an einer ersten Haltervorrichtung (8) bewegbar befestigt und die zweite Vorrichtung (6) ist an einer zweiten Haltervorrichtung (9) bewegbar befestigt. Die erste und zweite Haltervorrichtung (8, 9) umfassen jeweils eine Schiene, die sich in Raumrichtung X erstreckt. Die ersten Aufnahmepositionen (5) sind auf der ersten Ebene und/oder die zweiten Aufnahmepositionen (7) sind auf der zweiten Ebene verschiebbar entlang der Schienen in Raumrichtung X automatisch hin und her verfahrbar.

Die zweite Haltevorrichtung (9) ist in einem Abstand zum Verfahrweg der Zugriffsvorrichtung (3) im Bereich der zweiten Ebene angeordnet, so dass ein Zugriff auf die Reagenzbehälter (2) und/oder die Reagenzien in den Reagenzbehältern (2) mittels der Zugriffsvorrichtung (3) von oben an der zweiten Haltevorrichtung (9) vorbei auf mindestens einen in einer der ersten Aufnahmepositionen (5) angeordneten Reagenzbehälter (2) und/oder Reagenzien darin erfolgen kann.

Die Zugriffsvorrichtung (3) ist in Raumrichtung X an einer Position X2 angeordnet, an der der Instrumentzugriff auf die Reagenzbehälter (2) erfolgt und lässt sich automatisch in Raumrichtung Z verfahren. In Raumrichtung Z befindet sich die Zugriffsvorrichtung (3) oberhalb der zweiten Vorrichtung (6) und der zweiten Halterung (9). Die Zugriffsvorrichtung (3) ist in einer solchen Position in Raumrichtung Y weiter auch in Raumrichtung Y automatisch verfahrbar um die Reagenzbehälter (2) in einen Speicher für Reagenzbehälter (2) zu verbringen oder in andere Bereiche des automatischen Analysators zur weiteren Prozessierung. Eine Benutzereingabe von Reagenzbehältern (2) ist an einer Position X1 in Raumrichtung X vorgesehen.

FIG 2 zeigt die gleiche Vorrichtung (1) wie FIG 1 in einem anderen Betriebszustand. Die Zugriffsvorrichtung (3) wurde nun in Raumrichtung Z nach unten verfahren und der Greifer für Reagenzbehälter (2) befindet sich in Raumrichtung Z auf Höhe der ersten Vorrichtung (4). Die Zugriffsvorrichtung (3) ist in Raumrichtung Y vor der ersten und zweiten Halterung (8, 9) angeordnet.

FIG 3 zeigt die gleiche Vorrichtung (1) wie FIG 1 und 2 im gleichen Betriebszustand wie in FIG 2. Die Blickrichtung ist in Raumrichtung X ausgehend von der Position X1.

### Bezugszeichenliste

- 1: Vorrichtung
- 2: Reagenzbehälter
- 3: Zugriffsvorrichtung
- 4: erste Vorrichtung
- 5: erste Aufnahmeposition
- 6: zweite Vorrichtung
- 7: zweite Aufnahmeposition
- 8: erste Haltervorrichtung
- 9: zweite Haltervorrichtung
- X1: Benutzereingabe
- X2: Instrumentzugriff

## Patentansprüche

1. Vorrichtung (1) zur Prozessierung von Reagenzbehältern (2) auf mehreren Ebenen für ein automatisches Analysegerät, die Vorrichtung umfassend
- eine automatische Zugriffsvorrichtung (3) für einen Zugriff auf die Reagenzbehälter (2) und/oder auf Reagenzien in den Reagenzbehältern (2), wobei die Zugriffsvorrichtung (3) entlang eines Verfahrweges verfahrbar ist,
- eine erste Vorrichtung (4) umfassend eine Mehrzahl von ersten Aufnahmepositionen (5) für Reagenzbehälter (2), wobei die ersten Aufnahmepositionen (5) auf einer ersten Ebene angeordnet sind,
- eine zweite Vorrichtung (6) umfassend eine Mehrzahl von zweiten Aufnahmepositionen (7) für Reagenzbehälter (2), wobei die zweiten Aufnahmepositionen (7) auf einer zweiten Ebene angeordnet sind,
wobei die zweite Vorrichtung (6) wenigstens teilweise über der ersten Vorrichtung (4) angeordnet ist,
wobei die zweite Ebene wenigstens teilweise über der ersten Ebene angeordnet ist,
wobei die automatische Zugriffsvorrichtung (3) wenigstens teilweise über der ersten (4) und der zweiten Vorrichtung (6) angeordnet ist, wobei der Verfahrweg der Zugriffsvorrichtung (3) die zweite Ebene schneidet,
wobei die erste Vorrichtung (4) an einer ersten Haltervorrichtung (8) bewegbar befestigt ist und wobei die zweite Vorrichtung (6) an einer zweiten Haltervorrichtung (9) bewegbar befestigt ist,
wobei die ersten Aufnahmepositionen (5) auf der ersten Ebene und/oder die zweiten Aufnahmepositionen (7) auf der zweiten Ebene verschiebbar sind,
wobei die zweite Haltevorrichtung (9) in einem Abstand zum Verfahrweg der Zugriffsvorrichtung (3) im Bereich der zweiten Ebene angeordnet ist, so dass ein Zugriff auf die Reagenzbehälter (2) und/oder die Reagenzien in den Reagenzbehältern (2) mittels der Zugriffsvorrichtung (3) von oben an der zweiten Haltevorrichtung (9) vorbei auf mindestens einen in einer der ersten Aufnahmepositionen (5) angeordneten Reagenzbehälter (2) und/oder Reagenzien darin erfolgen kann.

2. Vorrichtung (1) nach Anspruch 1, wobei die Prozessierung der Reagenzbehälter (2) eine Eingabe, Ausgabe und/oder Lagerung von einem oder mehrerer Reagenzbehälter (2) umfasst.

3. Vorrichtung (1) nach einem der vorhergehenden Ansprüche, wobei die zweite Haltevorrichtung (9) versetzt zum vertikalen Bewegungsraum der Zugriffsvorrichtung (3) in der zweiten Ebene angeordnet.

4. Vorrichtung (1) nach einem der vorhergehenden Ansprüche, wobei die erste und zweite Haltevorrichtung (8, 9) teilweise, bevorzugt vollständig übereinander angeordnet sind.

5. Vorrichtung (1) nach einem der vorhergehenden Ansprüche, wobei die Verfahrwege der ersten und zweiten Vorrichtung (4, 6) teilweise, bevorzugt vollständig übereinander angeordnet sind.

6. Vorrichtung (1) nach einem der vorhergehenden Ansprüche, wobei die Zugriffsvorrichtung (3) eine Pipettiervorrichtung, bevorzugt umfassend eine Pipettiernadel zum Pipettieren von Reagenzien umfasst.

7. Vorrichtung (1) nach einem der vorhergehenden Ansprüche, wobei die Zugriffsvorrichtung (3) einen automatischen Transferarm zum Transferieren von Reagenzbehältern (2) innerhalb des Analysegeräts umfasst.

8. Vorrichtung (1) nach einem der vorhergehenden Ansprüche, wobei die erste und/oder zweite Haltervorrichtung (8, 9) jeweils mindestens eine Schiene umfasst und wobei die Haltevorrichtung (8, 9) an dieser Schiene entlang verfahrbar ist.

9. Vorrichtung (1) nach einem der vorhergehenden Ansprüche, wobei die Zugriffsvorrichtung (3) auf alle in zweiten Aufnahmepositionen (7) angeordneten Reagenzbehältern (2) zugreifen kann.

10. Vorrichtung (1) nach einem der vorhergehenden Ansprüche, wobei die Normalen der ersten und der zweiten Ebene parallele sind, und wobei bevorzugt die Normale der ersten und/oder der zweiten Ebene parallele zum Richtungsvektor der Schwerkraft verläuft.

11. Vorrichtung (1) nach einem der vorhergehenden Ansprüche, wobei die Zugriffsvorrichtung (3) bevorzugt parallel und/oder senkrecht zur Normalen der ersten und/oder der zweiten Ebene verfahrbar ist.

12. Vorrichtung (1) nach einem der vorhergehenden Ansprüche, wobei die Zugriffsvorrichtung (3) eine Transfervorrichtung zum Transferieren von Reagenzbehältern (2) in die ersten (5) und/oder zweiten Aufnahmepositionen (7) hinein und/oder aus diesen heraus umfasst.

13. Verfahren zur Prozessierung von Reagenzbehältern (2) auf mehreren Ebenen für ein automatisches Analysegerät mittels einer Vorrichtung (1) nach einem der vorhergehenden Ansprüche, das Verfahren umfassend die folgenden Schritte:
- Anordnung mindestens eines ersten Reagenzbehälters (2) in eine der ersten Aufnahmepositionen (5),
- Zugriff mittels der Zugriffsvorrichtung (3) von oben auf den ersten Reagenzbehälter (2).

14. Verfahren nach Anspruch 13, weiter umfassend die folgenden Schritte:
- Anordnung mindestens eines zweiten Reagenzbehälters (2) in eine der ersten Aufnahmepositionen (5),
- Anordnung der ersten Aufnahmepositionen (5) auf der ersten Ebene und/oder der zweiten Aufnahmepositionen (7) auf der zweiten Ebene durch verschieben der ersten Vorrichtung (4) und/oder Verschiebung der zweiten Vorrichtung (6), so dass die zweite Vorrichtung (6) sich nicht über der ersten Aufnahmeposition (5) mit dem zweiten Reagenzbehälter (2) befindet,
- Zugriff mittels der Zugriffsvorrichtung (3) von oben auf den zweiten Reagenzbehälter (2).

15. Automatisches Analysegerät umfassend eine Vorrichtung (1) nach einem der Ansprüche 1 bis 12, wobei das automatische Analysegerät bevorzugt einen automatischen Gefäßgreifer umfasst.
